(19) Europäisches Patentamt
European Patent Office
Office européen des brevets

(11) Veröffentlichungsnummer: **0 002 697**
**B1**

(12) # EUROPÄISCHE PATENTSCHRIFT

(45) Veröffentlichungstag der Patentschrift: **28.04.82**

(51) Int. Cl.³: **F 16 F 15/03** //G11B5/58

(21) Anmeldenummer: **78101599.5**

(22) Anmeldetag: **07.12.78**

(54) **Feder-Masse-Schwingungssystem.**

(30) Priorität: **30.12.77 DE 2759065**

(43) Veröffentlichungstag der Anmeldung:
**11.07.79 Patentblatt 79/14**

(45) Bekanntmachung des Hinweises auf die Patenterteilung:
**28.04.82 Patentblatt 82/17**

(84) Benannte Vertragsstaaten:
**DE FR GB**

(56) Entgegenhaltungen:
DE - A - 1 918 747
DE - A - 2 051 911
DE - A - 2 603 688
DE - A - 2 603 689
FR - A - 2 094 610
US - A - 2 776 560
US - A - 3 473 852
US - A - 3 924 268
US - A - 4 083 433

FUJITSU SCIENTIFIC AND TECHNICAL JOURNAL, Vol. 8, Juni 1972, Kawasaki,

(73) Patentinhaber: **International Business Machines Corporation**
**Armonk, N.Y. 10504 (US)**

(72) Erfinder: **Matla, Arno**
**Dresdner Strasse 1**
**D-7035 Waldenbuch (DE)**
Erfinder: **Matthaei, Horst**
**Schulstrasse 42**
**D-7035 Waldenbuch (DE)**
Erfinder: **Zimmermann, Volker**
**Hülbenstrasse 2**
**D-7036 Schönaich (DE)**

(74) Vertreter: **Willich, Wolfgang, Dipl.-Ing.**
**Schönaicher Strasse 220**
**D-7030 Böblingen (DE)**

(56) Entgegenhaltungen:
M. HIYANE et al., "Development of linear motion actuator",
* Seiten 59—89 *

FUJITSU SCIENTIFIC AND TECHNICAL JOURNAL, Vol. 10, März 1974, Kawasaki,

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 002 697 B1

(56) Entgegenhaltungen:
**Y. INOUE et al., "New linear motion actuator for head positioning"**
*** Seiten 95—118 ***

**FEINWERKTECHNIK UND MICRONIC, Vol. 77, Mai-Juni 1973, München, DE, OLBRICH "Aufbau und Kennwerte elektrodynamischer Linearmotoren als Positionierer für Plattenspeicher"**
*** Seiten 151—157 ***

# Feder-Masse-Schwingungssystem

Die Erfindung bezieht sich auf ein Schwingungssystem für Maschinen und Geräte, das aus einer mittels Feder(n) beweglich gelagerten Masse besteht, wobei die Masse als Teil eines Tauchspulensystems ausgebildet und der Spulenstrom entsprechend der erforderlichen Bewegung des Schwingungssystems steuerbar ist.

Ein derartiges System ist beispielsweise in der DE—A—26 03 689 beschrieben und besteht dort aus einem Feder-Masse-Hauptsystem mit einem Antrieb, der als Feder-Masse-Hilfssystem ausgebildet und in der Fortsetzung der Bewegungsbahn des Hauptsystems derart gelagert ist, daß es mit gleicher Frequenz wie das Hauptsystem, jedoch gegenphasig schwingt. Diese Anordnung ermöglicht eine vollständige Tilgung der schwingenden Massenkräfte des Hauptsystems, ohne daß eine Zusatzmasse erforderlich ist.

Eine weitere, ähnlich aufgebaute Anordnung, die zur Unterdrückung von Störschwingungen dient, ist durch die DE—A—20 51 911 bekannt und enthält gleichfalls eine mittels Feder(n) schwingfähige, als "Anti-Schwinger" wirksame Tauchspulenanordnung. Bei dieser Ausführung ist der Schwingkörper in einem auf dem schwingenden Bauteil zu befestigenden Gehäuse angeordnet, und es ist entweder die Spule oder der Magnet mit dem Gehäuse starr verbunden, während der andere, als seismische Masse wirksame Teil mittels Feder(n) beweglich angeordnet ist.

Die Eigenschwingungszahl eines als Feder-Masse-System ausgebildeten Schwingers ist bekanntlich durch die Masse des bewegten Körpers und die Konstante der Federelemente bestimmt und als Resonanzfrequenz eines Schwingers bei der Konstruktion von mit solchem Schwingungssystem ausgerüsteten Maschinen und Geräten zu berücksichtigen. Man wählt, um ein unerwünschtes Mitschwingen der Maschine oder benachbarter Bauteile und -gruppen zu vermeiden, möglichst weit auseinanderliegende Resonanzfrequenzen, nach Möglichkeit auch unter Einbeziehung der Schwingungen höherer Ordnung. Der Erfolg dieser Maßnahme kann jedoch beeinträchtigt werden, wenn während des Betriebs veränderliche Einflußgrößen die Eigenschwingungszahl der Maschine verschieben. Denn allen bisher bekannten Feder-Masse-Systemen ist gemeinsam, daß ihre Resonanzfrequenz konstant ist und ohne Veränderung der schwingenden Masse oder Austausch der Feder(n) nicht abgeglichen werden kann.

Der vorliegenden Erfindung liegt die Aufgabe zugrunde, das Feder-Masse-Schwingungssystem der eingangs genannten Art so zu gestalten, daß seine Resonanzfrequenz veränderbar ist, so daß bei wechselnden Betriebsbedingungen der Maschine die Eigenfrequenz des Schwingungssystems den jeweiligen Erfordernissen unmittelbar angepaßt werden kann. Eine solche Anpassungsmöglichkeit ist wünschenswert z.B. bei Maschinen mit an sich konstanter Soll-Drehzahl und einem integrierten Schwingungssystem, wenn Drehzahlschwankungen auftreten können und sich dadurch Veränderungen in der Abstimmung der Eigenfrequenz zur Drehzahlfrequenz ergeben.

Zur Lösung der vorgenannten Augabe wird nunmehr gemäß der Erfindung vorgeschlagen, daß zur Erzeugung einer in ausgelenkter Lage der Masse wirksamen, variablen elektrischen Federkonstanten das Tauchspulensystem zwei gleiche, bezüglich der Gleichgewichtslage der Masse symmetrisch angeordnete und aus dem stationären Magnetfeld beiderseits gleich herausragende Teilspulen bzw. Spulenhälften aufweist, die mit entgegengesetzt gerichteten Beeinflussungsströmen jeweils gleicher Stärke gespeist werden.

Die Anordnung eines Paares elektromagnetischer Spulen beiderseits und symmetrisch zu einem beweglichen Körper ist bekannt, z.B. in der Anwendung in einem Meßgerät für seismische und Gravitationsmessungen nach der US—A—2 776 560. Der dort als Schwinger ausgebildete, die Meßwerte analog darstellende bewegliche Körper ist jedoch nicht Teil eines Feder-Masse-Systems, sondern wird im Luftspalt eines elektromagnetischen Feldes geführt, und additiv wirksame Spulenpaare dienen zur Ermittlung der den jeweiligen Verstellkräften entsprechenden Rückstellkräfte und zur Erzeugung von die Verstellwege darstellenden Analogsignalen.

Andererseits ist die Aufteilung einer elektromagnetischen Betätigungsspule als solche bekannt, und zwar zu dem Zweck, sie entweder nur in der einen oder nur in der anderen Richtung wirksam zu machen oder beide Spulenhälften gegenläufig wirksam werden zu lassen, um das zu betätigende Element zu zentrieren und in der zentrierten Lage zu stabilisieren.

Hierbei werden jedoch den Spulenhälften je nach Richtung und Betrag der Abweichung zur Korrektur unterschiedliche Stromstärken zugeführt.

Demgegenüber werden die erfindungsgemäß vorgesehenen Teilspulen bzw. Spulenhälften so angeordnet und betrieben, daß sie ausschließlich Magnetfelder von jeweils beiderseits gleicher Größe und Wirkung, aber entgegengesetzter Feldlinienrichtung erzeugen und somit infolge der Geometrie des Tauchspulensystems auf die schwingende Masse eine positionsabhängige Stellkraft ausüben, also eine mit elektrischen Größen herbeigeführte Federkonstante wirksam ist, welche der Konstanten der mechanischen Feder bzw. Federn überlagert wird. Das Maß der Vergrößerung bzw. Verringerung der mechanischen Federkonstante wird bei vorgegebener Spulengröße durch die — jeweils einheitliche — Stärke der den beiden Teilspulen zugeführten Beeinflussungsströme bestimmt. Die hierdurch erzeugten Magnetfelder rufen in Wechselwirkung mit dem stationären Magnetfeld des Stellantriebes Kraftwirkungen in der Linie der Schwingbewegungen hervor, die sich in der Mittellage des Schwingers kompensieren, jedoch eine Rückstellkraft bewirken, sobald der Schwinger aus seiner Gleichgewichts- oder Mittellage ausgelankt ist.

Vorzugsweise weist ein nach der erfindungsgemäßen Lehre gestaltetes Schwingungssystem Teilspulen mit gleichem Wicklungssinn auf, die zur Beeinflussung der vorgegebenen mechanischen Federkonstante mit Beeinflussungsströmen entgegengesetzter Flußrichtung gespeist werden. Eine solche Ausbildung ist insbesondere auch dann von Vorteil, wenn die Masse entsprechend ihrer Funktion mittels eines als Tauchspulenmotor ausgebildeten Stellantriebes aus ihrer neutralen oder Gleichgewichtslage verstellbar angeordnet ist, z.B. zum Zwecke der widerstandsfreien Nachführung eines daran befestigten Zeigers, Armes oder ähnlichen Elements. In diesem Fall kann man nämlich die Spule des Stellantriebes in zwei gleiche Spulenhälften aufteilen. Diesen können jeweils aus den beiden Teilströmen gebildete Gesamtströme zugeführt werden, nämlich der resultierende Strom aus dem Verstellstrom und der jeder Spulenhälfte zugeordnete Beeinflussungsstrom. Bei dieser Ausbildung werden somit keine zusätzlichen Spulen benötigt. Selbstverständlich können aber auch zusätzlich zu der Spule des Tauchspulenmotors zwei Teilspulen angeordnet und deren Magnetfelder demjenigen des Stellantriebes überlagert werden. Diese Ausbildung bietet eine größere Freiheit in der Auswahl der Spulen hinsichtlich der erzeugten magnetischen Felder durch entsprechende Wahl der Drahtstärke und Wicklungszahl.

Die Erfindung wird im folgenden anhand der Zeichnungen am Beispiel einer Zugriffseinrichtung für einen Magnetplattenspeicher beschrieben.

Es zeigen:

Fig. 1 eine schematische Darstellung der Führung und des Stellantriebes eines Magnetkopf-Trägerarmes für einen Magnetplatenspeicher.

Fig. 2 ein Diagramm zur Darstellung des Verlaufs des Spurfolgefehlers in Abhängigkeit von der Umdrehungsfrequenz für eine Speicherplatte mit Kunststoff als Trägermaterial,

Fig. 3A eine schematische Detaildarstellung der Spule des Stellantriebes gemäß Fig. 1, mit in Spulenhälften aufgeteilter Tauchspule,

Fig. 3B eine Alternativausführung der Tauchspule des Stellantriebes nach Fig. 1, mit gesonderten Teilspulen, und

Fig. 4 eine Schaltungsanordnung zur Steuerung der Ströme der Teilspulen nach Fig. 3A in Abhängigkeit von der Umdrehungsfrequenz.

In Fig. 1 ist ein Magnetspeicher-Plattenstapel 10 dargestellt, der, von einem Plattenstapel-Antriebsmotor 12 angetrieben, ständig umläuft. Ein Magnetkopf 14 zur Aufzeichnung und Abtastung von Datensignalen ist am Ende eines Kopfträgerarmes 16 befestigt, der seinerseits mit dem Spulenkörper 20 mit einer Spule 20a eines Tauchspulenantriebes 18 verbunden ist. Der Eisenmantel 22 des Tauchspulenantriebes 18 ist auf einer Plattform 26 gelagert, während der Spulenkörper 20 über Federn 24 horizontal relativ zur Plattform 26 reibungsfrei beweglich geführt ist. Die Plattform 26 ist, wie in Fig. 1 durch Rollen 28 schematisch dargestellt, in Richtung des Doppelpfeiles 27 auf einem Plattformträger 30 beweglich geführt und der Plattformträger 30 ist seinerseits, wie durch Rollen 36 und eine Führungsfläche 34 gekennzeichnet, in Richtung des Doppelpfeiles 32, also vertikal verstellbar. Ein Antriebszylinder 38 dient zur Zwei-Richtungs-Verstellung der Plattform 26 misamt Tauchspulenantrieb 18 und dem Kopfträgerarm 16 relativ zum Plattformträger 30 in Richtung des Doppelpfeils 27, während die Antriebseinrichtung für die Vertikalverstellung des Plattformträgers 30 in Richtung des Doppelpfeils 32 in der Zeichnung nicht dargestellt ist.

Zur Aufzeichnung von Datensignalen auf einer der Speicherplatten des Magnetspeicher-Plattenstapels 10 oder zur Abtastung von aufgezeichneten Datensignalen wird zunächst bei eingefahrenem Antriebszylinder 38, wie in Fig. 1 dargestellt, der Plattformträger 30 in der vertikalen Richtung gemäß dem Doppelpfeil 32 so verstellt, daß der Magnetkopf 14 zur Oberfläche der ausgewählten Speicherplatte des Plattenstapels 10 ausgerichtet ist. Anschließend wird mittels des Antriebzylinders 38 die Plattform 26 in Richtung des Doppelpfeils 27 nach rechts verstellt, und zwar so weit, bis der Magnetkopf 14 mit der für die Aufzeichnung bzw. Abtastung ausgewählten Spur auf der Speicherplatte ausgerichtet ist.

Die hohe Dichte der Spuren für die Signalaufzeichnung auf der Plattenoberfläche macht es erforderlich, daß die Ausrichtung des Magnetkopfes 14 zu der ausgewählten Spur ständig überwacht und erforderlichenfalls korrigiert wird. Ein derartige Spurfolgeregelung kann auf verschiedene Arten gesteuert werden. Mann kann z.B. den Magnetkopf 14, der die Datensignale aufzeichnet oder abtastet, gleichzeitig dazu benutzen, aus der gleichen Kreisspur Servosignale zur Regelung seiner Spurlage abzutasten, wobei die Servosignale entweder auf einer zweiten Magnetschicht der Speicherplatte oder in gesonderten Kreissektoren aufgezeichnet sind. Eine Spurfolgeregelung mit verbesserter Ansprechempfindlichkeit und -geschwindigkeit besteht, darin, an einem beweglichen Trägerarm einen einstellbaren

Magnetkopfträger anzuordnen, dessen Antriebseinrichtung einer Servoeinrichtung zugeordnet ist; die Servoeinrichtung wird dabei durch vom Magnetkopf 14 abgetastete Servosignale, durch die Verschiebungsgröße zwischen dem beweglichen Trägerarm und dem einstellbaren Magnetkopfträger sowie durch den jeweiligen Geschwindigkeitswert des beweglichen Trägerarms geregelt (US—Patentschrift 3 924 268).

Das Spurfolge-Regelsystem muß zur Erfüllung der hohen Anforderungen an die Regelgenauigkeit und -geschwindigkeit auf die Eigenfrequenz des durch den Spulenkörper 20, die Federn 24 und den Kopfträgerarm 16 mit Magnetkopf 14 gebildeten Feder-Masse-Systems abgestimmt sein. Hierbei macht man sich zunutze, daß bei einem stabilen Regelkreis mit einem Feder-Masse-System die größte Verstärkung bei der Eigenfrequenz der Regelstrecke erzielt wird. Deshalb legt man zweckmäßig die Eigenfrequenz des Feder-Masse-Systems an die Stelle des jeweils zu erwartenden Spurfolgefehlers. Die größte zu erwartende radiale Abweichung im Spurverlauf ist bei rotierenden Systemen das Einfache oder ein Mehrfaches der Umdrehungsfrequenz. Bei Speicherplatten aus flexiblem Werkstoff, z.B. Polyesterfolie, wie sie als Floppy-Disks bekannt sind, ist die größte radiale Abweichung im Spurverlauf bei der doppelten Umdrehungsfrequenz ($2f_R$) zu erwarten, da dieses Material infolge seiner Vorzugsrichtung bei umlaufender Speicherplatte unvermeidbar eine gewisse elliptische Deformierung aufweist. Demgegenüber entspricht bei starren Speicherplatten aus metallischem Werkstoff die größte Abweichung der Umdrehungsfrequenz $f_R$; denn hier kann beim Wechsel des Stapels auf der Antriebswelle eine gewisse Exzentrizität auftreten. Man erhält somit bei der Spurfolgeregelung die besten Ergebnisse, wenn die Resonanzfrequenz des Feder-Masse-Systems auf die Umdrehungsfrequenz abgestimmt ist.

Diese Verhältnisse sind für den Fall einer Speicherplatte aus Kunststoffolie, wie Polyesterfolie, in Fig. 2 in einem Spurfolgefehler/Frequenz-Diagramm dargestellt. Über der der Frequenz f zugeordneten Abszisse ist die Größe des Spurfolgefehlers SF aufgetragen, und der Kurvenverlauf zeigt die Reduktion des Spurfolgefehlers auf einen auf die doppelte Umdrehungsfrequenz $2f_R$ abgeglichenen Regelalgorithmus.

Verschiebt sich die Frequenz des größten Spurfolgefehlers, z.B. bei auftretenden Drehzahlschwankungen, nach $2f_R \pm \Delta f$, so wird auch der Punkt der größten Reduktion verändert, so daß eine entsprechende Abstimmung der Eigenfrequenz des Feder-Masse-Systems auf die jeweilige Drehzahl erforderlich ist, wenn die Wirksamkeit der Spurfolgeregelung nicht beeinträchtigt werden soll.

Zwei Lösungsmöglichkeiten hierfür, die nach dem gleichen Lösungsprinzip arbeiten, sind in den Fign. 3A und 3B dargestellt. Es ist anzumerken, daß Bauteile gleicher Funktion in den Fign. 3A und 3B mit den gleichen Bezugsziffern dargestellt sind wie in der Gesamtdarstellung nach Fig. 1 und daß in beiden Darstellungen die magnetische Rückführung aus Gründen der vereinfachten Darstellung nicht gezeigt ist.

Bei der Ausführungsform nach Fig. 3A ist die Spule 20 in zwei Spulenhälften 20a′ und 20a″ aufgeteilt, die über Anschlüsse $A_1$, $A_0$, $A_2$, an eine Steuerschaltung angeschlossen sind. In der Ruhe- oder neutralen Mittellage des Schwingüngssystems befinden sich beide Spulenhälften 20a′ und 20a″ auf der Länge $l_1 = l_2$ im Magnetfeld. Die Spurfolgeregelung induziert in beiden Spulenhälften den gleich großen Strom gleicher Richtung

$$I_R(t) = I_{R1}(t) + I_{R2}(t)$$

mit der wirksamen Kraft

$$F_e(t) = 1 \cdot B \cdot I_R(t),$$

wobei: 1 = effektive Leiterlänge im Luftspalt,
B = magnetische Induktion.

Überlagert nun $I_R(t)$ die entgegengesetzt gerichteten Ströme $I_1 + I_2 = 0$, so wirkt bei einer Auslenkung d aus der Ruhelage die rücktreibende oder heraustreibende Kraft, je nach Richtung von $I_1$ und $I_2$.

$$F_e = \pm [(l_1 + d)I_1 - (l_2 - d)I_2] \cdot B$$

Aus $1_2 = l_2$ folgt

$$F_e = \pm [I_1 + I_2] \cdot d \cdot B$$

Die elektrische Federkonstante ist somit

$$D_e = \pm \frac{F_e}{d} = \pm (I_1 + I_2) \cdot B$$

Damit verändert sich die Eigenfrequenz des Feder-Masse-Schwingüngssystems zu

$$f = \frac{1}{2\pi} \sqrt{\frac{D_m \pm D_e}{M}}$$

wobei $D_m$ die Federkonstante der mechanischen Feder,
$D_e$ die "elektrische Federkonstante" und
M die Masse bedeuten.

Vergleicht man diesen Wert mit der Eigenfrequenz eines konventionellen Feder-Masse-Schwingüngssystems:

$$f = \frac{1}{2\pi} \sqrt{\frac{D_m}{M}}$$

so ergibt sich, daß sich die Frequenz f mit Hilfe

der Veränderung der "elektrischen Federkonstante" variieren läßt, nämlich durch gleichzeitige Veränderung der Teilströme $I_1$ und $I_2$.

Fig. 3B zeigt ein Ausführung des Tauchspulenantriebes 18, bei der zusätzlich zur Spule 20a zwei Teilspulen 21a und 21b angeordnet sind, wobei über Leitungsanschlüsse A der Stellstrom für die Spule 20a zugeführt wird, während die — jeweils gleichen — Ströme für die Teilspulen 21a und 21b über separate Leitungen Aa und Ab von einer entsprechenden Steuerschaltung zugeführt werden, welche die Größe und Richtung der gegensinnigen Teilströme $I_a$ und $I_b$ entsprechend der Umdrehungsfrequenz des Plattenstapels verändern. Das durch den Stellstrom $I_R$ erzeugte magnetische Feld sowie die magnetischen Felder entsprechend den Teilströmen $I_a$ und $I_b$ überlagern sich somit, wobei die effektive Wirkung auf den Spulenkörper 20 die gleiche ist wie bei der Ausführung nach Fig. 3A. Während bei der Ausführungsform nach Fig. 3B zusätzliche Teilspulen 21a und 21b erforderlich sind, hat dies den Vorteil, daß man die Spule 20a einerseits und die Teilspulen 21a und 21b andererseits hinsichtlich ihrer Drahtstärke und Windungszahl unabhängig voneinander frei bemessen kann.

Mit der in Fig. 4 beispielsweise dargestellten Schaltungsanordnung kann man die gegensinnigen Teilströme $I_1$ und $I_2$ (vergl. Fig. 3A) entsprechend der Umdrehungsfrequenz nachstellen. Am Eingang E1 der Schaltung liegt die der Drehzahl des Magnetspeicher-Plattenstapels 10 entsprechende Umdrehungsfrequenz $f_R$ an. Sie kann von einem auf der Welle des Magnetspeicher-Plattenstapels 10 angeordneten Übertrager oder auch von den Magnetkopfsignalen selbst abgenommen werden. Über einen Frequenz/Spannungs-Wandler 40 gelangen die Signale über Widerstände $R_1$ in zwei Leistungsverstärker 42 und 44. Ausgangsseitig an die Leistungsverstärker 42 und 44 ist über Leitungen 48 bzw. 49 eine Spule S angeschlossen, deren Mittelanzapfung über eine Leitung 50 an Masse liegt und durch die entgegengerichtete Ströme $I_1$ und $I_2$ fließen. Am Eingang E2 liegt das Positionsfehlersignal PES an und wird einerseits über einen Widerstand $R_2$ dem Leistungsverstärker 44 zugeführt und andererseits über eine Umkehrschaltung 46 und einen Widerstand $R_2$ dem Leistungsverstärker 42. Dadurch erreicht man, daß die Regelströme $I_{R1}$ und $I_{R2}$ zum Nachstellen des Magnetkopfes über das Feder-Masse-Schwingüngssystem gleichsinnig durch die Spule S fließen.

Die Spule S mit Mittelanzapfung gemäß Fig. 4 entspricht bei der Ausführungsform nach Fig. 3A der Spule mit den Spulenhälften 20a' und 20a", die Leitung 48 vom Leistungsverstärker 42 zur Spule S nach Fig. 4 entspricht dem Leitungsanschluß $A_1$ in Fig. 3A, die Leitung 49 entspricht dem Leitungsanschluß $A_2$ und die Leitung 50 zu Masse dem Leitungsanschluß $A_0$ nach Fig. 3A.

## Patentansprüche

1. Schwingungssystem für Maschinen und Geräte, bestehend aus einer mittels Feder(n) (24) beweglich gelagerten Masse, wobei die Masse als Teil eines Tauchspulensystems (18, 20, 22) ausgebildet und der Spulenstrom entsprechend der erforderlichen Bewegung des Schwingungssystems steuerbar ist, dadurch gekennzeichnet, daß zur Erzeugung einer in ausgelenkter Lage der Masse wirksamen, variablen elektrischen Federkonstanten das Tauchspulensystem (18, 20, 22) zwei gleiche, bezüglich der Gleichgewichtslage der Masse symmetrisch angeordnete und aus dem stationären Magnetfeld beiderseits gleich herausragende Teilspulen bzw. Spulenhälften (20a', 20a"; 21a, 21b) aufweist, die mit entgegengesetzt gerichteten Beeinflussungsströmen jeweils gleicher Stärke gespeist werden.

2. Schwingungssystem nach Anspruch 1, dadurch gekennzeichnet, daß die Teilspulen (21a, 21b) gleichen Wicklungssinn aufweisen und mit Beeinflussungsströmen entgegengesetzter Flußrichtung gespeist werden.

3. Schwingungssystem nach den Ansprüchen 1 und 2, bei dem die Masse aus ihrer Gleichgewichtslage mittels eines als Taüchspulenmotor aüsgebildeten Stellantriebes (18, 20, 22) verstellbar ist, dadurch gekennzeichnet, daß die Spule (20a) des Stellantriebes (18, 20, 22) in zwei gleiche Spulenhälften (20a', 20a") aufgeteilt ist, welchen jeweils aus zwei Teilströmen, nämlich dem Verstellstrom und dem jeder Spulenhälfte (20a', 20") zuzuführenden Beeinflussungsstrom gebildete Gesamströme zugeführt werden.

## Revendications

1. Système oscillant pour machines et dispositif, consistant en une masse montée mobile par l'intermédiaire d'un ou de plusieurs ressorts et conçue sous la forme d'un dispositif à bobine mobile (18, 20, 22), le courant de la bobine pouvant être commandé selon le mouvement requis du système d'oscillation, caractérisé en ce que pour la génération d'une constante de ressort électrique variable effective lorsque la masse est en position déviée, le système à bobine mobile (18, 20, 22) comprend deux demi-bobines égales (20a', 20a", 21a, 21b) qui sont disposées symétriquement par rapport au point d'équilibre de la masse et qui sortent de façon égale des deux côtés des champs magnétiques fixes, lesdites demi-bobines étant excitées avec des courants effectifs en ens opposé de même intensité.

2. Système oscillant selon la revendication 1 caractérisé en ce que les bobines partielles (21a, 21b) présentent le même sens d'enroulement et sont excitées par des courants effectifs de sens opposé.

3. Système oscillant selon les revendications 1 et 2 dans lequel la masse peut être

déplacée par rapport à son point d'équilibre par un moyen d'entraînement (18, 20, 22) conçu sous la forme d'un moteur à bobine mobile, caractérisé en ce que la bobine (20a) du moyen d'entraînement (18, 20, 22) est divisée en deux demi-bobines égales (20a', 20a"), auxquelles sont appliqués des courants formés de deux courants partiels respectifs, à savoir le courant d'excitation et le courant effectif à appliquer à chaque demi bobine (20a', 20a").

**Claims**

1. Oscillation system for machines and devices, consisting of a mass movably supported by a spring or springs, the mass being designed as a voice coil system (18, 20, 22), and the coil current being controllable in accordance with the necessary movement of the oscillation system, characterized in that for generating a variable electric spring constant effective in the deflected position of the mass the voice coil system (18, 20, 22) is equipped with two equal part coils or coil halves (20a', 20a"; 21a, 21b) which are arranged symmetrically with respect to the balance of the mass, and which equally protrude on both sides of the stationary magnetic fields, said part coils or coil halves being energized with oppositely directed effective currents of the same intensity.

2. Oscillation system as claimed in claim 1, characterized in that the part coils (21a, 21b) have the same sense of winding, and are energized with effective currents of the opposite direction.

3. Oscillation system as claimed in claims 1 and 2, where the mass can be moved out of its balance by means of a drive (18, 20, 22) designed as a voice coil motor, characterized in that the coil (20a) of the drive (18, 20, 22) is divided into two equal coil halves (20a', 20a"), total currents formed of two respective part currents, i.e. the driving current and the effective current to be applied to each coil half (20a', 20a"), being applied thereto.

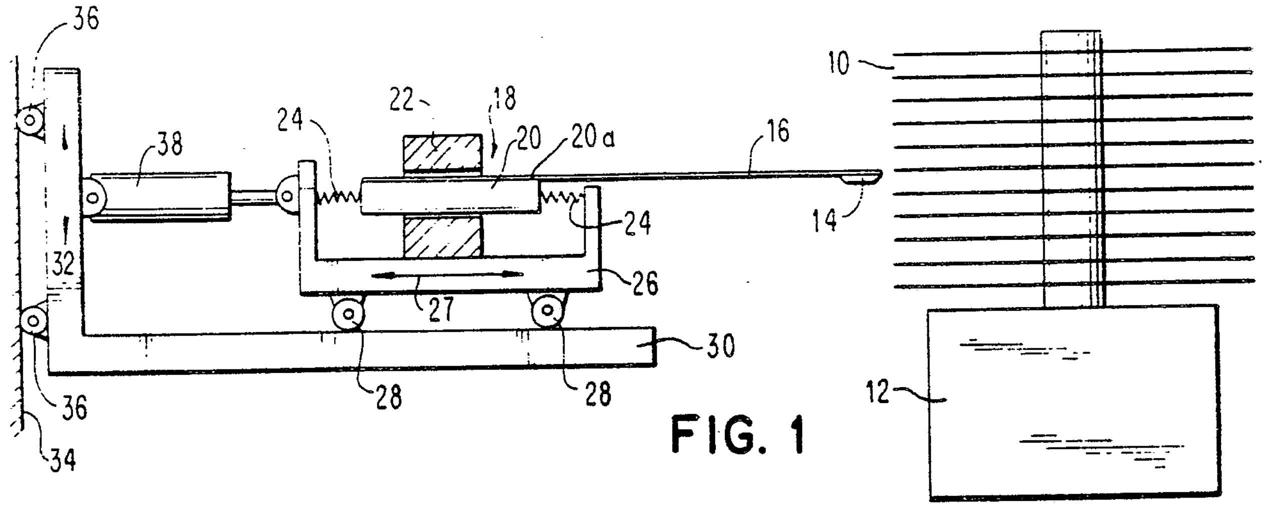


FIG. 1

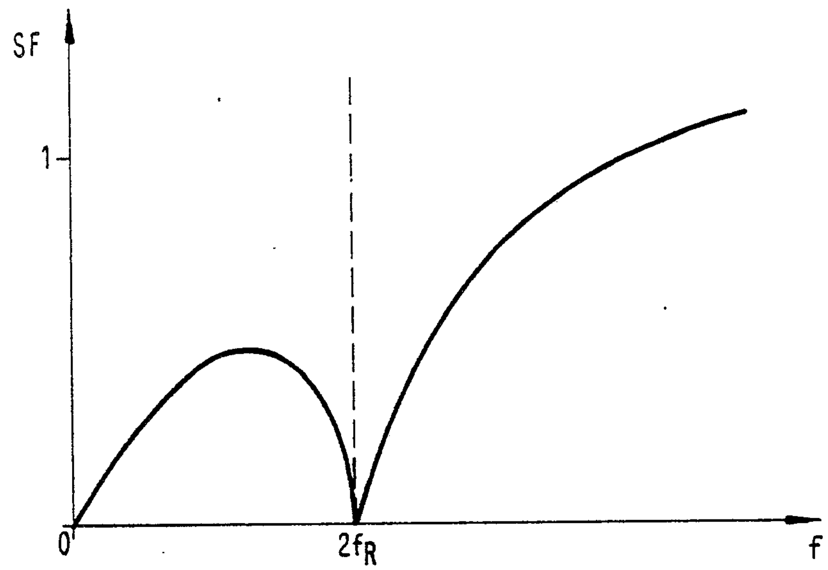


FIG. 2

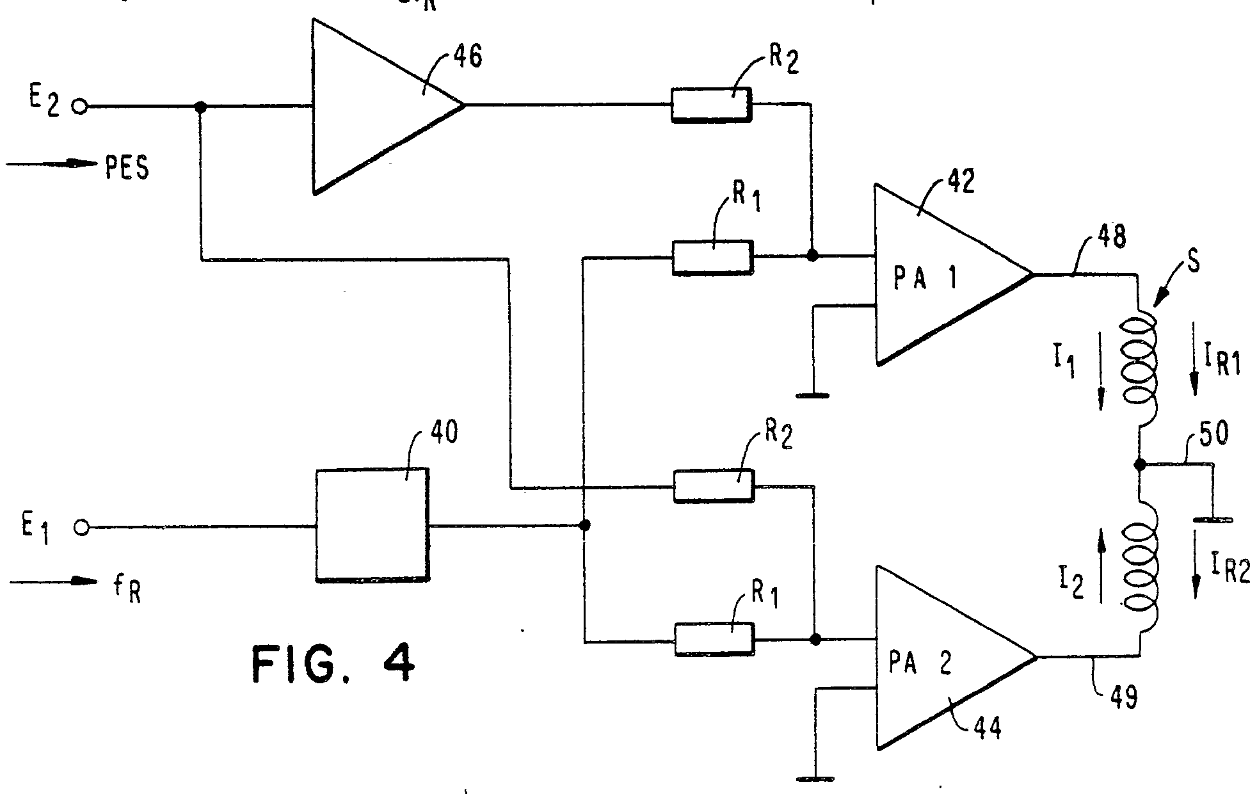


FIG. 4

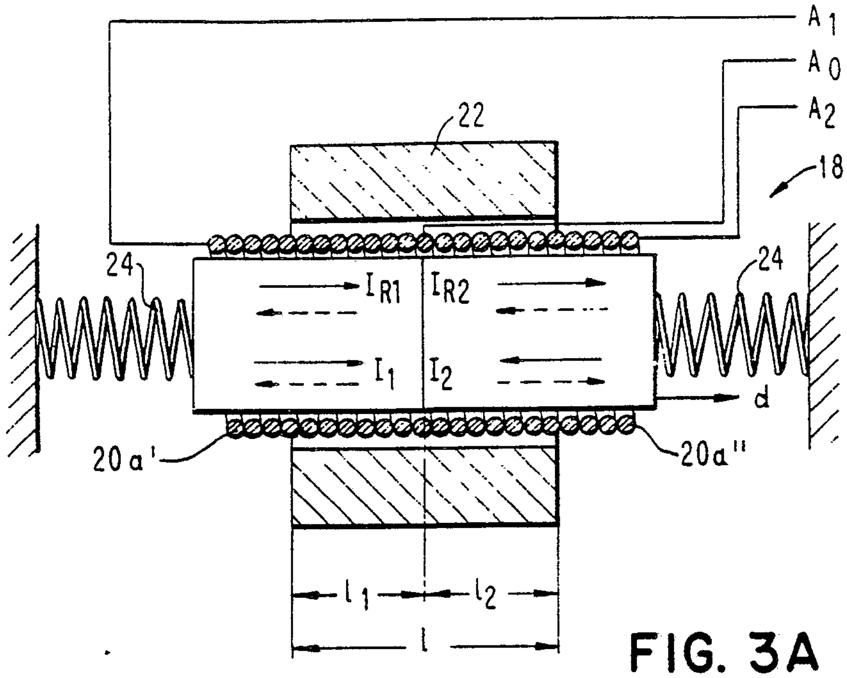
A1
A0
A2
22
18
24
IR1
IR2
I1
I2
24
d
20a'
20a''
l1
l2
l

FIG. 3A

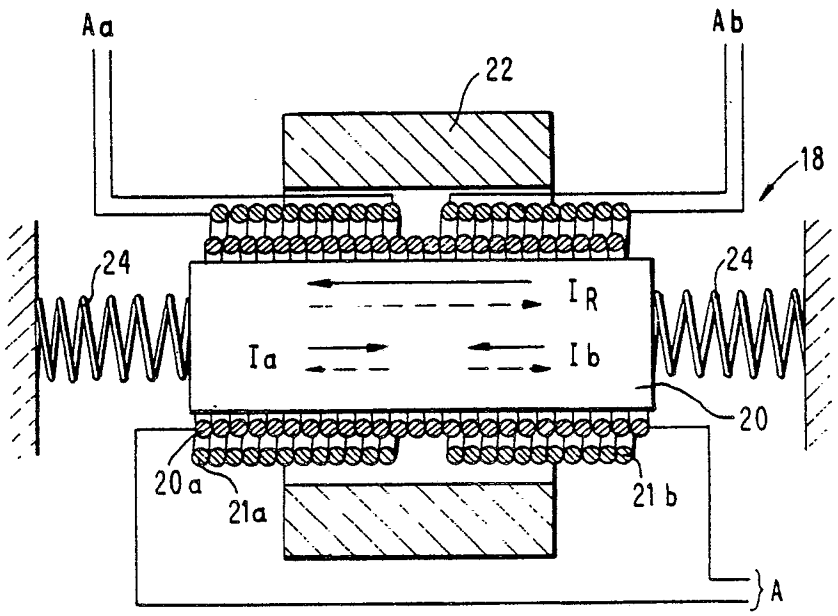
Aa
Ab
22
18
24
IR
Ia
Ib
24
20
20a
21a
21b
A

FIG. 3B